# EUROPÄISCHE PATENTSCHRIFT

(11) **EP 1 302 757 B1**
(45) Veröffentlichungstag und Bekanntmachung des Hinweises auf die Patenterteilung: **28.12.2005**
(21) Anmeldenummer: 02102417.9
(22) Anmeldetag: 04.10.2002
(51) Int. Cl.: G01G 21/30

(54) **Labyrinthdichtung mit lösbarem Ringelement und Waage**
Labyrinth sealing device with detachable ring and weighing device
Joint à labyrinthes pourvu d'un anneau détachable et balance

(30) Priorität: 09.10.2001 DE 10149606
(43) Veröffentlichungstag der Anmeldung: 16.04.2003
(73) Patentinhaber: Mettler-Toledo GmbH, 8606 Greifensee (CH)
(72) Erfinder: Burkhard, Hans-Rudolf, 8942 Wila (CH); Hess, Luzi, 8051 Zürich (CH); Graf, Willi, 8606 Greifensee (CH)
(74) Vertreter: Ulrich, Jürg

(56) Entgegenhaltungen:
- EP-A- 1 146 322
- CH-A- 633 106
- DE-A- 3 205 799
- US-A- 3 848 688
- US-A- 4 846 293

## Beschreibung

Die Erfindung betrifft eine für Waagen vorgesehene Labyrinthdichtung mit entfernbarem Ringelement sowie eine Waage nach dem Oberbegriff des Patentanspruchs 1 bzw. 12.

Labyrinthdichtungen werden oft zur Abdichtung von Gehäusen von Maschinen oder Geräten verwendet, die ein in einer Gehäuseöffnung gelagertes mechanisches Teil aufweisen, das zur Übertragung einer Kraft oder eines Drehmomentes dient. Aus Dubbel, Taschenbuch für den Maschinenbau, 17. Auflage, Springer-Verlag, Berlin 1990, Seite G87 ist bekannt, dass bei Wälzlagern das Eindringen von Schmutz oder das Austreten von Schmierstoff mittels Labyrinthdichtungen verhindert werden kann. In Figur 31a ist dort gezeigt, dass eine Labyrinthdichtung aus zwei je mit wenigstens einem röhrenförmigen Ring versehenen Dichtungsteilen besteht, die ineinander verschoben, konzentrisch zur Gehäuseöffnung angeordnet werden. Dadurch wird ein enger Labyrinthgang geschaffen, der die reibungslose gegenseitige Verschiebung oder Drehung der beiden Dichtungsteile erlaubt und gleichzeitig verhindert, dass Substanzen in das abzudichtende Gehäuse ein- oder aus dem Gehäuse austreten können.

In US-A-3848688 wird eine Waage mit einer Labyrinthdichtung offenbart, wobei die Labyrinthdichtung zwischen dem Waagengehäuse und dem mit der Wägezelle verbundenen Übertragungsglied, unterhalb der Waagschale angeordnet ist. Die Labyrinthdichtung dient dazu, das Eindringen von Flüssigkeiten, beispielsweise beim Reinigen der Waage, in das Innere des Waagengehäuses zu verhindern. Die Labyrinthdichtung weist eine Anzahl gegenüber dem Übertragungsglied konzentrisch angeordneter, rohrförmiger Lamellen auf, die wechselseitig mit dem Waagengehäuse beziehungsweise mit dem Übertragungsglied verbunden sind. Die mit dem Waagengehäuse fest verbundenen Lamellen weisen ihrerseits radial umlaufende, reifenförmige Lamellen auf um die Wirkung der Labyrinthdichtung noch zu verstärken.

Die Figur 1 der europäischen Patentanmeldung EP-A-1 146 322 zeigt einen Teil einer mit einem Gehäuse 30 versehenen Waage, die in einer Gehäuseöffnung 31 ein in einem Körper 40 axial verschiebbares Übertragungsglied 20 aufweist, mittels dessen eine von einem Wäggut bewirkte Kraft zur Messzelle der Waage übertragbar ist. Oberhalb der Öffnung sitzt ein Körper 40 mit einer Einrichtung 42 zur elastischen Aufweitung des Umfangs. Diese Vorrichtung, die Gegenstand der europäischen Patentanmeldung EP-A-1 146 322 ist, weist eine topfförmige Abdeckkappe 1 auf, die auf einen Knopf 13 eines Nabenteils 21 aufgesetzt wird, welches die Druckkraft auf ein konisches mit der Messzelle gekoppeltes Endstück 22 überträgt.

Die Abdeckkappe 1 weist einen hülsen- oder röhrenförmigen Aussenring 10 und einen hülsen- oder röhrenförmigen Innenring 12 auf, die koaxial zueinander verlaufen, einen unterschiedlichen Durchmesser aufweisen und dadurch einen dazwischen liegenden Hohlraum 14 begrenzen. Konzentrisch zur Öffnung 31 des Gehäuses 30 ist eine topfförmige Dichtungskappe 2 ortsfest angeordnet, die ein gegen die Abdeckkappe 1 gerichtetes Ringelement 110 aufweist, dessen Durchmesser derart gewählt ist, dass das Ringelement 110 nach dem Aufsetzen der Abdeckkappe 1 in den Hohlraum 14 eindringt, wodurch ein Labyrinthgang 100 gebildet wird, der die Form einer konzentrisch verlaufenden Welle annimmt.

Zur Reinigung der Waage wäre es oft wünschenswert, den Labyrinthgang 100 vollständig verschliessen zu können. Insbesondere bei automatisierten Messprozessen wäre es zudem von Vorteil, wenn das Übertragungsglied 20 arretiert werden könnte, wodurch unerwünschte Krafteinwirkungen auf die Messzelle der Waage während Messpausen vermieden würden.

Diese beiden Aufgaben werden bei der in der Figur gezeigten Vorrichtung in vorteilhafter Weise mittels einer den Körper 40 umschliessenden reifenförmigen Einrichtung 42 gelöst, die willkürlich aufgeweitet und wieder verkleinert werden kann. Nach dem Aufweiten stösst die reifenförmige Einrichtung 42 an den Innenring 12 der Abdeckkappe 1 an, wodurch der Labyrinthgang 100 dicht abgeschlossen und die Abdeckkappe 1 festgehalten wird. Nach dem Abschliessen des Labyrinthgangs 100 kann die Waage daher auch mit einem Wasserstrom oder mit Druckluft gereinigt werden, ohne dass Schmutz, Wasser oder Messgutrückstände durch den Labyrinthgang 100 in das Gehäuse 30 eintreten können. Gleichzeitig wird das Übertragungsglied 20 fixiert, so dass keine Laständerungen auf die Messzelle der Waage übertragen werden.

Die Abdeckkappe 1 kann abgehoben werden, wonach eine Reinigung der darunter liegenden Vorrichtungsteile durchgeführt werden kann. Dabei ist ersichtlich, dass der Raum 15 zwischen dem reifenförmigen Teil 42 und dem Ringelement 110 der ortsfest angeordneten Dichtungskappe 2 kaum zugänglich ist, so dass darin gelagerte Rückstände kaum entfernt werden können. Ebenso können Rückstände nur schlecht entfernt werden, die zwischen die Dichtungskappe 2 und das Gehäuse 30 gelangen. Ferner gestaltet sich die Herstellung der gesamten Vorrichtung durch die Montage der Dichtungskappe 2 verhältnismässig aufwändig.

Der vorliegenden Erfindung liegt daher die Aufgabe zugrunde, eine verbesserte Labyrinthdichtung zu schaffen. Ferner ist eine mit einer Labyrinthdichtung versehene Waage der eingangs genannten Art zu schaffen, die insbesondere im Bereich der Labyrinthdichtung schnell und gründlich gereinigt werden kann.

Diese Aufgaben werden mit einer Labyrinthdichtung und einer Waage gelöst, welche die in Anspruch 1 bzw. 12 angegebenen Merkmale aufweisen. Vorteilhafte Ausgestaltungen der Erfindung sind in weiteren Ansprüchen angegeben.

Die erfindungsgemässe Labyrinthdichtung dient zur Abdichtung einer Öffnung in einem Gehäuse, wie sie beispielsweise für die Durchführung eines axial in der Gehäuseöffnung verschiebbar gelagerten Übertragungsglieds einer mit einer Messzelle versehenen Waage vorhanden ist. Die Dichtung besteht dabei aus wenigstens einem aus einem Rohrstück oder als Hülse gestalteten Ringelement, das rund um die Öffnung am Gehäuse befestigt ist und mindestens einem weiteren hülsenförmigen Ring, der Teil einer gegenüber dem ersten axial verschiebbaren Abdeckkappe ist. Im Fall der Waage kann die Abdeckkappe als Waagschale ausgebildet sein, die auf das Übertragungsglied aufsetzbar ist. Erfindungsgemäss sind Mittel ortsfest mit dem Gehäuse der Waage verbunden, die zur lösbaren Befestigung des wenigstens einen rohr- oder hülsenförmigen Ringelementes dienen. Das feststehende Ringelement ist somit ein lösbares Ringelement. Es bildet zusammen mit wenigstens einem rohr- oder hülsenförmigen Ring der topfförmigen Abdeckkappe die Labyrinthdichtung.

Die vorzugsweise auf das Übertragungsglied aufsetzbare und wieder entfernbare topfförmige Abdeckkappe, die vorzugsweise einen Aussenring und einen Innenring aufweist, bildet daher das erste Teil und das lösbare Ringelement das zweite Teil der Labyrinthdichtung.

Nach dem Entfernen der topfförmigen Abdeckkappe und des lösbaren Ringelementes verbleiben von der Labyrinthdichtung daher nur noch die Befestigungsmittel, so dass im Fall einer Waage die weiteren Vorrichtungsteile der Waage, gegebenenfalls insbesondere der eine aufweitbare Einrichtung tragende Körper, gut zugänglich sind und daher bei Bedarf schnell und gründlich gereinigt werden können.

Besonders vorteilhaft ist die erfindungsgemässe Lösung bei Waagen einsetzbar, die der gegebenenfalls automatisierten Gewichtsmessung von Substanzen mit toxischen Eigenschaften dienen. Durch periodische oder bedarfsweise Reinigung der Waage sind bei diesen Systemen Ablagerungen selbst kleinster Messgutrückstände, mit denen das Bedienungs- oder Wartungspersonal in Berührung kommen könnte, zu vermeiden oder zu beseitigen. Die erfindungsgemässe Labyrinthdichtung erlaubt ein Abspritzen wie unter Prüfbedingungen nach IP 65. Darüber hinaus erlaubt sie, deren hülsenförmiges Ringelement mit einem einzigen, einhändigen Handgriff einfach demontierbar und wieder aufsetzbar ist, eine gründliche und schnelle Reinigung der ausserhalb des Gehäuses liegenden Vorrichtungsteile, so dass die Waage in optimalem Zustand gehalten werden kann und durch notwendige Reinigungsarbeiten nur kurze Unterbrüche verursacht werden.

Die Befestigungsmittel sind vorzugsweise mit Klammern, Nocken oder Gewindeteilen versehene, einfach ausgestaltete kleinere Segmente, die in eine innerhalb des rohr- oder hülsenförmigen Ringelementes vorgesehene Nut eingreifen und dieses festhalten können. Denkbar wäre auch eine Befestigung mittels einer radial durch das Ringelement in eine um die Öffnung des Gehäuses flanschartige Erhöhung geführte Schraube, doch sind Verbindungen ohne zusätzliche Elemente bevorzugt, die ausserdem ohne Werkzeug gelöst werden können.

In einer vorzugsweisen Ausgestaltung der Erfindung sind die Befestigungsmittel, die segmentweise an einem Kreisbogen anliegen, der durch das rohr- oder hülsenförmige, lösbare Ringelement gebildet wird, mit dem das Übertragungsglied umschliessenden Körper verbunden, so dass die Oberfläche des Waagengehäuses vor dessen Montage vollständig eben ausgestaltet und daher leicht gereinigt werden kann. Die Befestigungsmittel können jedoch auch am Gehäuse befestigt oder gegebenenfalls in dieses eingearbeitet sein.

Vorzugsweise ist das aus Metall, zum Beispiel Chromstahl, oder Kunststoff gefertigte Ringelement derart elastisch ausgestaltet, dass es unter manuellem Druck den Querschnitt ändert, so dass es aus dem Eingriff in die Befestigungsmittel mit einem einfachen einhändigen Griff gelöst und wieder verbunden werden kann.

In einer besonders vorteilhaften Ausführungsform weisen die Befestigungsmittel und die im Ringelement vorgesehene Nut im Bereich des gegenseitigen Eingriffs aneinander anliegende Profile auf, die vorzugsweise bewirken, dass das lösbar montierte Ringelement, welches elastisch an die Befestigungsmittel andrückt, in eine vorgesehene Position, vorzugsweise gegen das Gehäuse gezogen und dort gehalten wird.

Nachfolgend wird die Erfindung anhand von Zeichnungen näher erläutert. Dabei zeigt :
- Fig. 1: den Längsschnitt durch die Achse einer mit einer Labyrinthdichtung versehenen Öffnung eines Waagengehäuses, durch die ein der Krafteinleitung dienendes, mit einer topfförmigen Abdeckkappe versehenes, axial verschiebbares Übertragungsglied reicht;
- Fig. 2: eine erfindungsgemässe, mit der Vorrichtung von Figur 8 versehene Waage;
- Fig. 3: eine schematische Darstellung der in der Vorrichtung von Figur 1 verwendeten Labyrinthdichtung;
- Fig. 4: ein lösbar montierbares rohr- oder hülsenförmiges Ringelement, das Teil einer erfindungsgemässen Labyrinthdichtung bildet, und das zugehörige Befestigungsmittel in schematischer Darstellung;
- Fig. 5a: eine schematische Darstellung einer erfindungsgemässen Labyrinthdichtung nach der Montage des lösbaren Ringelementes von Figur 4 und dem Aufsetzen der topfförmigen Abdeckkappe;
- Fig. 5b: eine Detaildarstellung aus Figur 5a;
- Fig. 6: das lösbare Ringelement von Figur 4, von oben gesehen, während dessen Montage;
- Fig. 7: das lösbare Ringelement von Figur 4, von oben gesehen, nach dessen Montage;
- Fig. 8: die Vorrichtung von Figur 1 mit einer erfindungsgemässen Labyrinthdichtung gemäss Figur 5a;
- Fig. 9: die Vorrichtung von Figur 8 mit abgehobener Abdeckkappe und demontiertem Ringelement, und
- Fig. 10: die schematische Darstellung einer weiteren Ausgestaltung einer Labyrinthdichtung mit zwei lösbaren Ringelementen, die an dem dem Waagengehäuse zugewandten Ende mit Dichtungselementen versehen sind.

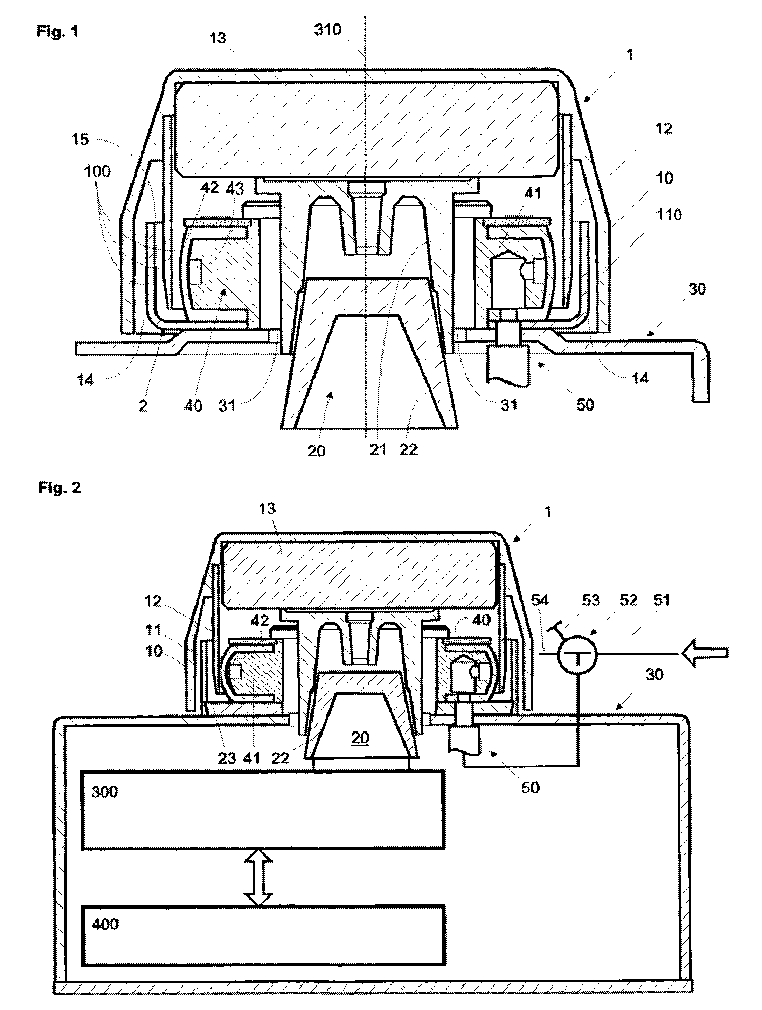

Die Figur 1 zeigt einen Teil einer in einem Gehäuse 30 angeordneten Waage, die ein in einer Gehäuseöffnung 31 entlang dessen Achse 310 verschiebbares mechanisches Teil bzw. ein Übertragungsglied 20 aufweist, mittels dessen eine von einem Wäggut bewirkte Kraft zur Messzelle der Waage übertragbar ist. Diese bereits einleitend beschriebene Vorrichtung weist eine topfförmige Abdeckkappe 1 auf, die auf einem mit einem Nabenteil 21 verbundenen Knopf 13 aufgesetzt wird. Das Nabenteil 21 überträgt eine anliegende Kraft auf ein konisch ausgestaltetes, mit der Messzelle gekoppeltes Endstück 22 des Lastaufnehmers der Waage.

Die Abdeckkappe 1 weist einen hülsen- oder röhrenförmigen Aussenring 10 und einen hülsen- oder röhrenförmigen Innenring 12 mit unterschiedlichen Durchmessern auf, die koaxial zueinander verlaufen und einen dazwischen liegenden Hohlraum 14 seitlich begrenzen. Konzentrisch zur Öffnung 31 des Gehäuses 30 ist eine Dichtungskappe 2 in Form eines Topfs ortsfest angeordnet, die ein gegen die Abdeckkappe 1 gerichtetes Ringelement 110 aufweist, dessen Durchmesser derart gewählt ist, dass das Ringelement 110 nach dem Aufsetzen der Abdeckkappe 1 in den Hohlraum 14 eindringt.

Die Abdeckkappe 1 kann abgehoben werden, wonach eine Reinigung der darunter liegenden Vorrichtungsteile durchgeführt werden kann. Wie einleitend beschrieben, ist jedoch der Raum im Bereich der ortsfest angeordneten Dichtungskappe 2 kaum zugänglich, so dass dort gelagerte Rückstände kaum entfernt werden können.

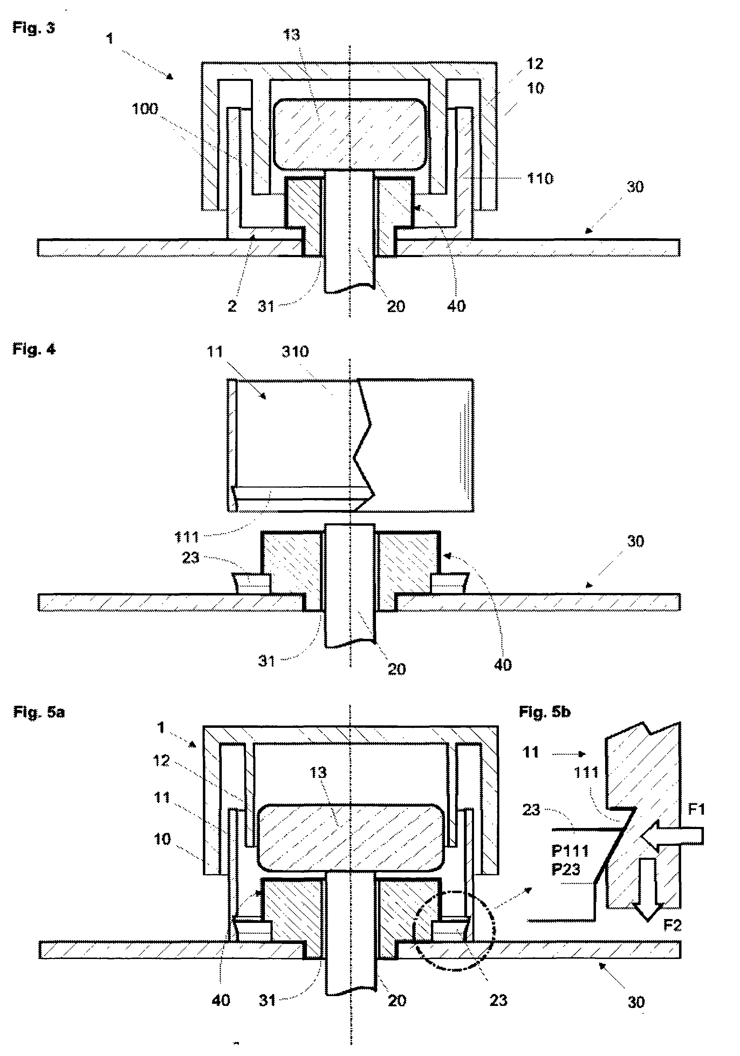

Figur 3 zeigt schematisch die in der Vorrichtung von Figur 1 verwendete Labyrinthdichtung mit den Ringen 10, 12 der Abdeckkappe 1 und das Ringelement 110, welche zusammen einen Labyrinthgang 100 begrenzen. Das Übertragungsglied 20 sowie der dieses und die Öffnung 31 umschliessende Körper 40 sind nur symbolisch dargestellt. Ferner ist ersichtlich, dass die Dichtungskappe 2 fest zwischen dem Gehäuse 30 und dem Körper 40 gehalten ist und daher zum Reinigen der Vorrichtung nicht entfernt werden kann.

Fig. 4 zeigt schematisch und nicht massstabgetreu einen mit dem Gehäuse 30 verbundenen Körper 40 sowie ein beispielsweise aus einem Rohrstück gefertigtes, rohr- oder hülsenförmiges Ringelement 11, das auf das Gehäuse 30 aufgesetzt und lösbar mit Befestigungsmitteln 23 verbunden werden kann. Es weist auf der Innenseite eine in sich geschlossene, in einer horizontalen Ebene kreisförmig verlaufende Nut 111 um die senkrechte Achse des Ringelementes 11 auf, die derart positioniert ist, dass die zugehörige Seite des lösbaren Ringelementes 11 nach dessen Montage am Gehäuse 30 anliegt. Mit dem Gehäuse 30 sind, direkt oder indirekt, Befestigungsmittel 23 verbunden, die nach dem Aufsetzen des lösbaren Ringelementes 11 in die Nut 111 eingreifen (siehe Figur 5a und Figur 5b) und das lösbare Ringelement 11 festhalten oder vorzugsweise nach unten gegen das Gehäuse 30 drücken. Die Nut 111 ist daher derart vom unteren Rand des lösbaren Ringelementes 11 beabstandet, dass nach der Montage eine abgeschlossene Verbindung zwischen dem lösbaren Ringelement 11 und dem Gehäuse 30 entsteht.

Die Figur 5a zeigt das lösbare Ringelement 11 in aufgesetzter Lage und die Abdeckkappe 1 in halb abgehobener Stellung.

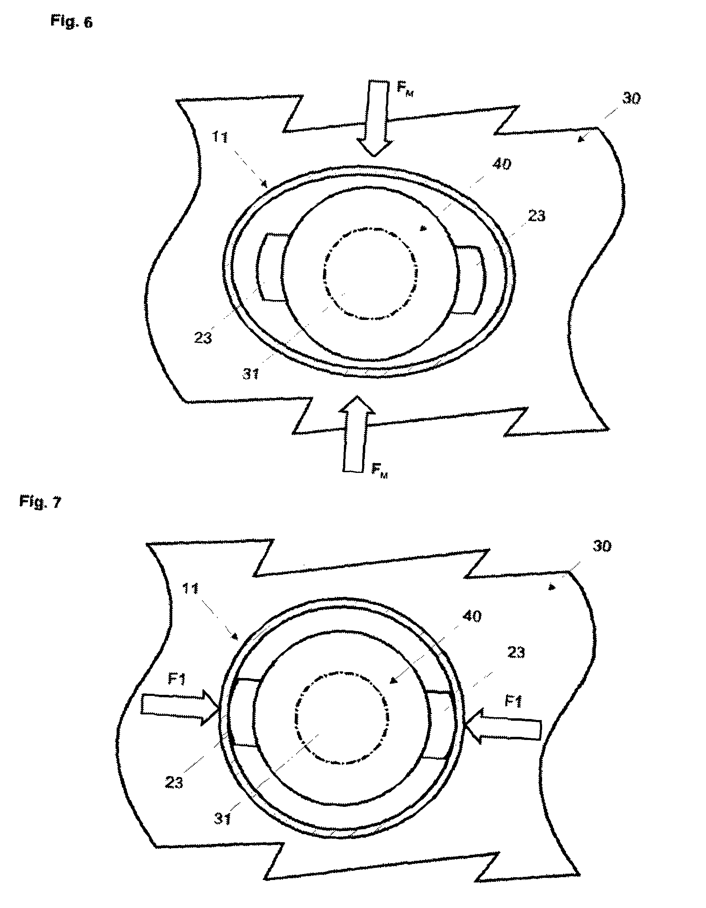

Figur 6 zeigt das lösbare Ringelement 11 in einer vorzugsweisen Ausgestaltung von oben während der Montage. Zur Befestigung des lösbaren Ringelementes 11 sind in dieser beispielsweise gezeigten Ausführung zwei Segmente vorgesehen, die in bezug auf die Gehäuseöffnung 31 einander in einem Abstand diametral gegenüberliegen, der entsprechend dem Innendurchmesser des lösbaren Ringelementes 11 gewählt ist, so dass die an den Segmenten 23 vorgesehenen Klammern, Nocken oder Gewindeelemente in die Nut 111 eingreifen können.

Vorzugsweise sind zwei der Befestigung dienende Segmente 23 vorgesehen. Möglich ist jedoch auch die Verwendung von zusätzlichen, entsprechend angeordneten Segmenten 23.

Das lösbare Ringelement 11 von Figur 6 ist aus einem elastischen Material, vorzugsweise aus Chromstahl, gegebenenfalls einem anderen Metall oder Kunststoff gefertigt und hinsichtlich des Querschnitts leicht verformbar. Zum Aufsetzen oder Entfernen des lösbaren Ringelementes 11 wird der Querschnitt durch manuelle Kraft F_{M} ellipsenförmig verändert. Nach dem Absetzen des lösbaren Ringelementes 11 und dem Wegfall der manuell bewirkten Kräfte F_{M} geht das lösbare Ringelement 11 aufgrund seiner Elastizität wieder in die ursprüngliche Form zurück und drückt dabei mit einer Kraft F1 von aussen gegen die Segmente 23, deren Befestigungselemente, wie in Figur 5b gezeigt, dabei in die Nut 111 eingreifen.

In der in Figur 5b gezeigten vorzugsweisen Ausgestaltung der Erfindung weisen die Befestigungsmittel 23 und die Nut 111 im Bereich des gegenseitigen Eingriffs aneinander anliegende Profile P23, P111 auf, die bewirken, dass das montierte Ringelement 11, welches elastisch an die Befestigungsmittel 23 andrückt, in eine vorgesehene Position, vorzugsweise gegen das Gehäuse 30 gezogen und dort gehalten wird. In der schematischen Darstellung von Figur 5b weisen die Profile P23, P111 geneigte Flächen auf, so dass eine Komponente F2 der Andruckkraft das lösbare Ringelement 11 nach unten drückt. In der praktischen Ausführung werden die Profile P23, P111 vorzugsweise nicht mit Ecken und Kanten, sondern in abgerundeter Form gefertigt.

Sofern das lösbare Ringelement 11 und die Befestigungsmittel 23 Gewindeelemente aufweisen, kann das Ringelement 11 auch aufgeschraubt werden. In diesem Fall könnte als Befestigungsmittel 23 ein umlaufendes Schraubengewinde am Körper 40 vorgesehen sein.

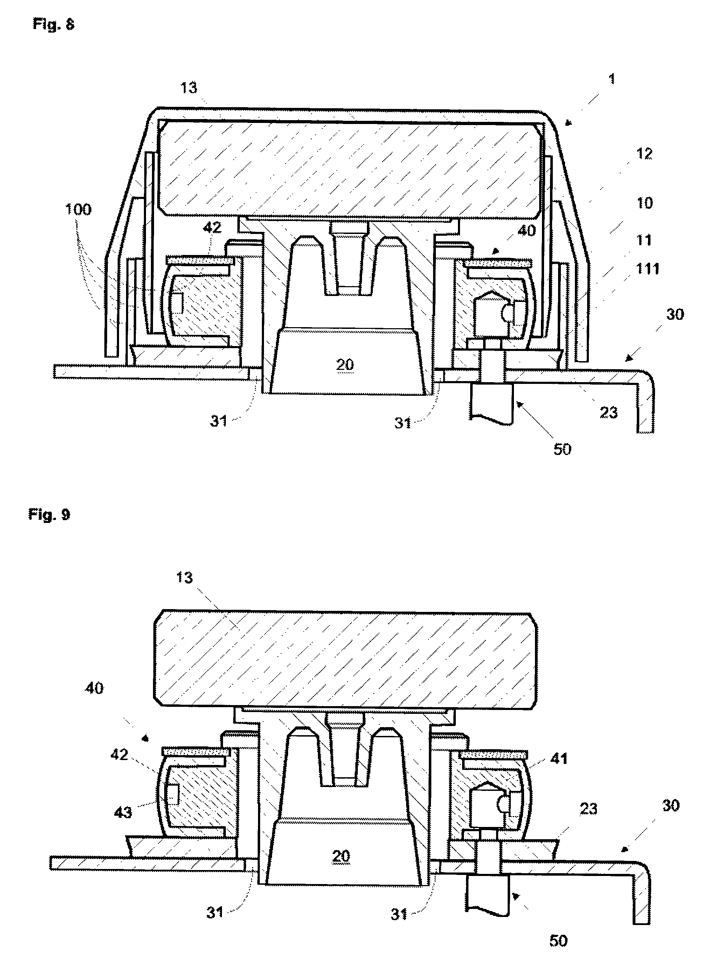

Figur 8 zeigt die Vorrichtung von Figur 1, ausgerüstet mit einer erfindungsgemässen Labyrinthdichtung gemäss Figur 5a. Die Befestigungsmittel 23 sind in der gezeigten Ausführung mit dem die Einrichtung zur Aufweitung des Umfangs dienenden Körper 40 verbunden.

Figur 9 zeigt die Vorrichtung von Figur 8 mit abgehobener Abdeckkappe und entferntem Ringelement 11. Ein Vergleich mit der Vorrichtung von Figur 1 offenbart, dass die Reinigung der erfindungsgemässen Vorrichtung nach Entfernung des lösbaren Ringelementes 11 ungehindert vollzogen werden kann, während wesentliche Teile der Vorrichtung von Figur 1 kaum zugänglich sind.

Die Ausgestaltung des Körpers 40 ist den Vorrichtungen von Figur 1 und Figur 8 hingegen gemeinsam. In der gezeigten Ausgestaltung weist der Körper 40 ein torusförmiges Element 41 mit einem darin vorgesehenen, nach aussen geöffneten Kanal 43 auf. Das torusförmige Element 41 ist von einer reifenförmigen elastischen Einrichtung 42 umgeben, die unter Zufuhr eines Fluids in den Kanal 43 aufweitbar und verkleinerbar ist. Durch vorzugsweise elektronisch steuerbare Aufweitung der Einrichtung 42 kann der Labyrinthgang 100 daher wahlweise abgeschlossen und wieder geöffnet und die Abdeckkappe 1 arretiert und wieder gelöst werden.

Nach dem Abschliessen des Labyrinthgangs 100 kann die Waage daher beispielsweise mit einem Wasserstrahl oder mit Druckluft gereinigt werden, ohne dass Schmutz, Wasser oder Messgutrückstände durch den Labyrinthgang 100 in das Gehäuse 30 eintreten können. Gleichzeitig wird die Abdeckkappe 1 mit Spiel gegenüber dem Übertragungsglied 20 fixiert, so dass keine Laständerungen auf die Messzelle der Waage übertragen werden.

Die reifenförmige Einrichtung 42 stösst in der Ausgestaltung von Figur 8 im ausgeweiteten Zustand an den Innenring 12 der topfförmigen Abdeckkappe 1 (vgl. Figur 2). Im Fall einer Ausweitung bei abgehobener Abdeckkappe 1 dient das lösbare Ringelement 11 als Schutz gegen Überdehnung der reifenförmigen Einrichtung 42.

Die Zufuhr oder der Auslass des Fluids erfolgt manuell oder automatisch, gesteuert mittels eines Ventils 52, über eine Druckleitung 51. Das Ventil 52 verfügt dazu, wie in Figur 2 gezeigt, beispielsweise über einen manuell zu betätigende Vorrichtung 53, die es erlaubt, Fluid über die Druckleitung 51 in die reifenförmige Einrichtung 42 einzuführen oder Fluid aus der reifenförmigen Einrichtung 42 auszulassen und über eine Auslassleitung 54 abzuführen.

Figur 2 zeigt schematisch eine erfindungsgemässe, mit der Vorrichtung von Figur 8 versehene Waage, zum Beispiel eine unterhalb eines Wiegeabschnittes eines Transportbandes angeordnete Bandwaage, die ein dicht abgeschlossenes, leicht zu reinigendes Gehäuse 30 aufweist. Innerhalb des Waagengehäuses 30 ist eine an sich bekannte Messzelle angeordnet (siehe beispielsweise U.S. Patentdokument Nr. 4,489,800), die mit einer Wägeelektronik 400 verbunden ist. Über das Waagengehäuse 30 erhebt sich das mit der topfförmigen Abdeckkappe 1 versehene Übertragungsglied 20, das axial verschieblich durch den Körper 40 hindurch reicht und das eine von einem Wäggut bewirkte Kraft an einen mit der Messzelle 300 verbundenen Kraftaufnehmer überträgt.

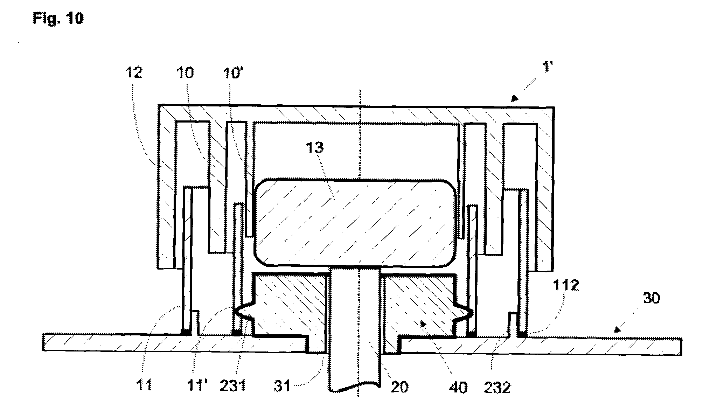

Mit Bezug auf die Figuren 4 bis 9 und 2 wurden vorzugsweise Ausgestaltungen der Erfindung beschrieben. Ausgehend von der erfindungsgemässen Lehre sind jedoch weitere Ausgestaltungen und Anpassung der Erfindung leicht zu finden. Wie in Figur 10 gezeigt, kann mehr als ein lösbares Ringelement 11 mit einer entsprechend angepassten Abdeckkappe 1' verwendet werden. Die zueinander korrespondierenden Ausgestaltungen der Nut 111 und der Befestigungsmittel 23, 231, 232 können verschiedenartig gewählt sein. Die Befestigungsmittel 23, 231, 232 können mit dem Körper 40 oder direkt mit dem Gehäuse 30 verbunden sein. Die lösbaren Ringelemente 11 können ferner mit Dichtungsringen 112 verbunden sein.

Die erfindungsgemässe, mit lösbaren Ringelementen 11 versehene Labyrinthdichtung kann zudem, gegebenenfalls entsprechend angepasst, bei weiteren Geräten oder Maschinen eingesetzt werden. Die Abdeckkappe 1, die in den Zeichnungen topfförmig dargestellt ist, kann dazu auch in einer anderen zweckdienlichen Form gestaltet sein. Sie kann auch mit einer einfach zu lösenden Verbindung mit dem Krafteinleitungsteil verbunden sein.

Die Befestigungsmittel 23, 231, 232 könnten ferner auch in eine auf der Aussenseite des lösbaren Ringelementes vorgesehene Nut oder in ein Gewinde eingreifen. Ferner kann das lösbare Ringelement beidseitig mit einer Nut oder einem Gewinde versehen sein. Der Fachmann ist ohne weiteres in der Lage, derartige Abwandlungen der Ausgestaltung vorzunehmen.

## Patentansprüche

1. Labyrinthdichtung mit wenigstens einem an einem eine abzudichtende Öffnung (31) aufweisenden Gehäuse (30) feststehenden, hülsenförmigen Ringelement (11, 110) und einer zu diesem axial verschieblichen Abdeckkappe (1) mit mindestens einem hülsenförmigen Ring (10, 10', 12), insbesondere für eine Waage mit einem durch das Gehäuse (30) reichenden Übertragungsglied (20) für die Krafteinleitung, **dadurch gekennzeichnet, dass** das wenigstens eine hülsenförmige Ringelement (11, 110) ein über ortsfest mit dem Gehäuse (30) verbundene Befestigungsmittel (23) in Arbeitslage fixierbares, von der übrigen Vorrichtung allein lösbares Ringelement (11) ist.

2. Labyrinthdichtung nach Anspruch 1, **dadurch gekennzeichnet, dass** das lösbar montierte Ringelement (11) gehäuseseitig am Gehäuse (30) anliegt.

3. Labyrinthdichtung nach Anspruch 2, **dadurch gekennzeichnet, dass** das lösbare Ringelement (11) an der am Gehäuse (30) anliegenden Seite einen Dichtungsring (112) aufweist.

4. Labyrinthdichtung nach einem der vorstehenden Ansprüche, **dadurch gekennzeichnet, dass** die Befestigungsmittel (23) segmentweise an einem Kreisbogen anliegen, der durch das lösbare Ringelement (11) gebildet wird.

5. Labyrinthdichtung nach Anspruch 4, **dadurch gekennzeichnet, dass** das lösbare Ringelement (11) derart elastisch ausgestaltet ist, dass es unter manuellem Druck den Querschnitt ändert, so dass es aus den Befestigungsmitteln (23) lösbar oder mit den Befestigungsmitteln (23) verbindbar ist.

6. Labyrinthdichtung nach einem der vorstehenden Ansprüche, **dadurch gekennzeichnet, dass** die Befestigungsmittel (23) Klammern, Nocken oder Gewindeelemente aufweisen, die in eine innerhalb des lösbaren Ringelementes (11) vorgesehene Nut (111) eingreifen und dieses festhalten können.

7. Labyrinthdichtung nach Anspruch 6, **dadurch gekennzeichnet, dass** die Befestigungsmittel (23) und die Nut (111) im Bereich des gegenseitigen Eingriffs aneinander anliegende Profile (P23, P111) aufweisen, die bewirken, dass das montierte lösbare Ringelement (11), welches elastisch an die Befestigungsmittel (23) andrückt in eine vorgesehene Position, vorzugsweise gegen das Gehäuse (30) gezogen und dort gehalten wird.

8. Labyrinthdichtung nach einem der vorstehenden Ansprüche, **dadurch gekennzeichnet, dass** die Befestigungsmittel (23) Teil des Gehäuses (30) sind.

9. Labyrinthdichtung nach einem der Ansprüche 1 bis 7, **dadurch gekennzeichnet, dass** die Befestigungsmittel (23) Teil eines am Gehäuse (30) befestigten Körpers (40) sind.

10. Labyrinthdichtung nach Anspruch 9, **dadurch gekennzeichnet, dass** am Körper (40) eine elastische, willkürlich aufweitbare und verkleinerbare Einrichtung (42) vorhanden ist, mittels der wahlweise der durch das lösbare Ringelement (11) und den mindestens einen hülsenförmigen Ring (10; 12) der Abdeckkappe (1) gebildete Labyrinthgang (100) abschliessbar und/oder die Abdeckkappe (1) arretierbar ist.

11. Labyrinthdichtung nach Anspruch 10, **dadurch gekennzeichnet, dass** die am Körper 40 vorhandene Einrichtung (42) reifenförmig ausgestaltet ist und mittels Druckänderungen eines zugeführten Fluids ausgeweitet und wieder verkleinert werden kann.

12. Waage mit einer Labyrinthdichtung nach einem der Ansprüche 1-11 mit einem Gehäuse (30), das eine abzudichtende Öffnung (31) aufweist, durch die hindurch ein der Krafteinleitung dienendes, eine topfförmige Abdeckkappe (1) tragendes und mit einer Messzelle (300) verbundenes, axial verschiebliches Übertragungsglied (20)reicht, **dadurch gekennzeichnet, dass** Befestigungsmittel (23) ortsfest mit dem Gehäuse (30) verbunden sind, die zur Fixierung wenigstens eines von der übrigen Vorrichtung allein lösbaren, hülsenförmigen Ringelements (11) in Arbeitslage dienen, welches zusammen mit wenigstens einem hülsenförmigen Ring (10; 12) der Abdeckkappe (1) die Labyrinthdichtung bildet.

13. Waage nach Anspruch 12, **dadurch gekennzeichnet, dass** die Befestigungsmittel (23) Teil eines am Gehäuse (30) befestigten Körpers (40) sind.

14. Waage nach Anspruch 13, **dadurch gekennzeichnet, dass** am Körper (40) eine elastische, willkürlich aufweitbare und verkleinerbare Einrichtung(42) vorhanden ist, mittels der wahlweise der durch das lösbare Ringelement (11) und den mindestens einen hülsenförmigen Ring (10; 12) der Abdeckkappe (1) gebildete Labyrinthgang (100) abschliessbar und/oder die Abdeckkappe (1) arretierbar ist.

## Claims

1. Labyrinth seal with at least one sleeve-shaped ring element (11, 110) held in a fixed position on a housing (30) having an opening (31) that is to be sealed, and with a cover cap (1) with at least one sleeve-shaped ring (10, 10', 12) that is axially movable relative to the sleeve-shaped ring element (11, 110), in particular for a balance with a transmitting member (20) for the force introduction reaching through the housing (30), **characterized in that** the at least on sleeve-shaped ring element (11, 110) is a ring element (11) which can be fixedly attached in its working position through fastener means (23) that are attached in a fixed location on the housing (30), which ring element (11) can be released by itself from the rest of the apparatus.

2. Labyrinth seal according to claim 1, **characterized in that** the side of the releasably installed ring element (11) that faces towards the housing (30) lies in contact against the housing (30).

3. Labyrinth seal according to claim 2, **characterized in that** on the side that lies against the housing (30) the releasable ring element (11) has a seal ring (112).

4. Labyrinth seal according to one of the preceding claims, **characterized in that** the fastener means (23) are lying as segments against a circular arc formed by the releasable ring element (11).

5. Labyrinth seal according to claim 4, **characterized in that** the releasable ring element (11) is designed to have elasticity in such a manner that it changes its cross-sectional shape with the application of manual pressure, so that it can be released from the fastener means (23) or connected to the fastener means (23).

6. Labyrinth seal according to one of the preceding claims, **characterized in that** the fastener means (23) comprise clamps, projections, or screw-threads that engage a groove (111) inside the ring element (11) and can hold the ring element (11) in place.

7. Labyrinth seal according to claim 6, **characterized in that** in they area where they engage each other the fastener means (23) and the groove (111) have mating profiles (P23, P111) lying against each other and having the effect that the installed releasable ring element (11) which is in elastic pressure contact to the fastener means (23) is pulled into a predetermined position, preferably against the housing (30), and is held **in that** position.

8. Labyrinth seal according to one of the preceding claims, **characterized in that** the fastener means (23) are part of the housing (30).

9. Labyrinth seal according to one of the claims 1 to 7, **characterized in that** the fastener means (23) are part of a body (40) that is attached to the housing (30).

10. Labyrinth seal according to claim 9, **characterized in that** a controllably expandable and contractible elastic device (42) is arranged on the body (40), allowing to selectively close the labyrinth-like path (100) formed by the releasable ring element (11) and the at least one sleeve-shaped ring (10; 12) of the cover cap (1), and/or to arrest the cover cap (1).

11. Labyrinth seal according to claim 10, **characterized in that** the device (42) arranged on the body (40) is configured in the shape of a tire and can be expanded and then contracted again from an expanded state by means of pressure changes of a fluid that is being supplied.

12. Balance with a labyrinth seal according to one of the claims 1 to 11 with a housing (30) that has an opening (31) to be sealed, through which opening (31) reaches an axially movable transmitting member (20) that serves to introduce a force, carries a cup-shaped cover cap (1), and is connected to a measuring cell (300), **characterized in that** fastener means (23) are connected to the housing (30) at a fixed location, serving to hold at least one sleeve-shaped ring element (11) in its working position, wherein said sleeve-shaped ring element (11) is releasable by itself from the rest of the apparatus and cooperates with the at least one sleeve-shaped ring (10; 12) of the cover cap (1) to form the labyrinth seal.

13. Balance according to claim 12, **characterized in that** the fastener means (23) are part of a body (40) that is attached to the housing (30).

14. Balance according to claim 13, **characterized in that** a controllably expandable and contractible elastic device (42) is arranged on the body (40), allowing to selectively close the labyrinth-like path (100) formed by the releasable ring element (11) and the at least one sleeve-shaped ring (10; 12) of the cover cap (1), and/or to arrest the cover cap (1).

## Revendications

1. Garniture en labyrinthe comprenant au moins un élément annulaire (11, 110) en forme de douille, fixé sur un carter (30) présentant une ouverture (31) à étanchéifier et un capot de recouvrement (1) coulissant de façon axiale par rapport à cet élément avec au moins une bague (10, 10', 12) en forme de douille, en particulier pour une balance avec un élément de transmission (20) traversant le carter (30) pour l'application de la force, **caractérisée en ce que** le au moins un élément annulaire (11, 110) en forme de douille est un élément annulaire (11) pouvant être fixé dans la position de travail par des moyens de fixation (23) reliés de façon fixe au carter (30) et pouvant être détaché seul du dispositif restant.

2. Garniture en labyrinthe selon la revendication 1, **caractérisée en ce que** l'élément annulaire (11) monté de façon amovible s'appuie côté carter sur le carter (30).

3. Garniture en labyrinthe selon la revendication 2, **caractérisée en ce que** l'élément annulaire (11) amovible présente une bague d'étanchéité (112) sur le côté s'appuyant sur le carter (30).

4. Garniture en labyrinthe selon l'une quelconque des revendications précédentes, **caractérisée en ce que** les moyens de fixation (23) s'appuient par segment sur un arc de cercle qui est formé par l'élément annulaire (11) amovible.

5. Garniture en labyrinthe selon la revendication 4, **caractérisée en ce que** l'élément annulaire (11) amovible est conçu élastique de telle sorte qu'il modifie la section sous pression manuelle, de sorte qu'il peut être détaché des moyens de fixation (23) et peut être relié aux moyens de fixation (23).

6. Garniture en labyrinthe selon l'une quelconque des revendications précédentes, **caractérisée en ce que** les moyens de fixation (23) présentent des pinces, des cames ou des éléments de filetage, qui s'engagent dans une rainure (111) prévue à l'intérieur de l'élément annulaire (11) amovible ou peuvent bloquer cet élément.

7. Garniture en labyrinthe selon la revendication 6, **caractérisée en ce que** les moyens de fixation (23) et la rainure (111) présentent dans la zone de l'engagement réciproque des profils (P23, P111) s'appuyant les uns sur les autres, qui font que l'élément annulaire (11) amovible et monté, qui s'appuie de façon élastique sur les moyens de fixation (23), est tiré dans une position prévue, de préférence vers le carter (30) et est maintenu à cet endroit.

8. Garniture en labyrinthe selon l'une quelconque des revendications précédentes, **caractérisée en ce que** les moyens de fixation (23) font partie du carter (30).

9. Garniture en labyrinthe selon l'une quelconque des revendications 1 à 7, **caractérisée en ce que** les moyens de fixation (23) font partie d'un corps (40) fixé sur le carter (30).

10. Garniture en labyrinthe selon la revendication 9, **caractérisée en ce que** sur le corps (40) se trouve un dispositif (42) élastique pouvant être élargi et pouvant être réduit volontairement, au moyen duquel au choix le pas de labyrinthe (100) formé par l'élément annulaire (11) amovible et la au moins une bague (10 ; 12) en forme de douille du capot de recouvrement (1) peut être fermé et/ou le capot de recouvrement (1) peut être bloqué.

11. Garniture en labyrinthe selon la revendication 10, **caractérisée en ce que** le dispositif (42) présent sur le corps (40) est conçu en forme de pneu et peut être élargi et à nouveau réduit au moyen de variations de pression d'un fluide amené.

12. Balance avec une garniture en labyrinthe selon l'une quelconque des revendications 1 à 11, comprenant un carter (30) qui présente une ouverture (31) à étanchéifier, à travers laquelle passe un élément de transmission (20) portant un capot de recouvrement (1) en forme de pot et relié à une cellule de mesure (300), pouvant coulisser axialement, **caractérisée en ce que** des moyens de fixation (23) sont reliés de façon fixe au carter (30), qui servent à la fixation d'au moins un élément annulaire (11) en forme de douille, pouvant être détaché seul du dispositif restant, dans la position de travail, qui forme conjointement avec au moins une bague (10 ; 12) en forme de douille du capot de recouvrement (1) la garniture en labyrinthe.

13. Balance selon la revendication 12, **caractérisée en ce que** les moyens de fixation (23) font partie d'un corps (40) fixé sur le carter (30).

14. Balance selon la revendication 13, **caractérisée en ce que** sur le corps (40) se trouve un dispositif élastique, pouvant être élargi et réduit volontairement, au moyen duquel au choix le pas de labyrinthe (100) formé par l'élément annulaire (11) amovible et la au moins une bague (10 ; 12) en forme de douille du capot de recouvrement (1) peut être fermé et/ou le capot de recouvrement (1) peut être bloqué.
